# EUROPÄISCHE PATENTSCHRIFT

(11) **EP 0 491 247 B1**
(45) Veröffentlichungstag und Bekanntmachung des Hinweises auf die Patenterteilung: **15.02.1995**
(21) Anmeldenummer: 91120939.3
(22) Anmeldetag: 06.12.1991
(51) Int. Cl.: C02F 11/12, F26B 21/14

(54) **Verfahren zur explosionssicheren Trocknung von Klärschlämmen**
Process for explosion-proof drying of sewage sludge
Procédé pour le séchage de boues d'épuration à protection anti-déflagrante

(30) Priorität: 18.12.1990 DE 4040541
(43) Veröffentlichungstag der Anmeldung: 24.06.1992
(73) Patentinhaber: Thyssen Still Otto Anlagentechnik GmbH, 44789 Bochum (DE)
(72) Erfinder: Dobert, Helmut, W-4320 Hattingen (DE); Dungs, Horst, W-4690 Herne (DE); Winck, Hartmut, W-4630 Bochum (DE)
(74) Vertreter: Dahlkamp, Heinrich-Leo, Dipl.-Ing.

(56) Entgegenhaltungen:
- DE-A- 3 324 251
- DE-C- 3 508 014
- FR-A- 2 466 439
- US-A- 4 245 570
- AUFBEREITUNGS TECHNIK. Bd. 29, Nr. 5, Mai 1988, WIESBADEN DE Seiten 243 - 251; H.G.BAEUERLE et al.: "Die Kontakttrocknung von kommunalem Klärschlämmen"

## Beschreibung

Die Erfindung betrifft ein Verfahren zur explosionssicheren Trocknung von vorentwässerten Klärschlämmen oder ähnlichen, brennbare Bestandteile enthaltenden Einsatzstoffen, wobei die Trocknungsanlage vorzugsweise aus einem Klärschlammvorlagebehälter, einem indirekt beheizten Trockner und einer pneumatischen und/oder mechanischen Trockengutförderung mit anschließendem Trockengutlagerbehälter besteht.

Unter dem Begriff 'Trocknungsanlagen' ist üblicherweise eine Anlage zu verstehen, die zum Beispiel aus den Anlagenkomponenten Klärschlammlagerung (Vorlagebehälter), Mischung (Klärschlamm mit rückgeführtem Trockengut), Trocknung, Trockengutkühlung, Trockengutförderung, Trockengutlagerung (Silo), Brüdenentstaubung (Zyklon), Brüdenkondensation, Brüdenabsaugung und gegebenenfalls einer Brüdenverbrennung besteht. Die Verbrennung der Restbrüden kann kombiniert sein mit der Brennkammer einer Dampferzeugungsanlage, die den für den Trockner benötigten Beheizungsdampf liefert. Darüber hinaus können insbesondere die Anlagenteile, die den Klärschlamm fördern oder lagern, zur Vermeidung von Geruchsausbreitung mit einer Absaugung versehen sein, wobei die abgesaugte Luft als Verbrennungsluft der erwähnten Brüdenverbrennung und/oder Dampferzeugungsanlage Verwendung finden kann.

Der im allgemeinen bis auf einen Restfeuchtegehalt von ca. 5 % getrocknete Klärschlamm hat einen hohen Anteil sehr feinen Staubes, der aufgrund seiner organischen Zusammensetzung in Verbindung mit Sauerstoff eine hohe Explosionsfähigkeit besitzt.

Darüber hinaus können die Klärschlämme, insbesondere wenn sie einem Faulprozeß entnommen wurden, Restmengen an brennbaren Faulgasen enthalten, die sowohl während der Lagerung, besonders aber während der Trocknung aus den Schlämmen entweichen können. Je nach Trocknungs- bzw. Beheizungstemperatur können auch bereits Schwelgase entstehen, die ebenfalls brennbar und in sauerstoffhaltiger Atmosphäre explosibel sind.

Besonders das gleichzeitige Auftreten von brennbaren Stäuben und Gasen erhöht die Zündfähigkeit und somit auch die Gefahr von Explosionen.

Trockner mit indirekter Beheizung, z. B. Scheibentrockner, werden nach dem Stand der Technik mit leichtem Unterdruck betrieben, so daß die entstehenden wasserdampf-, staub- und eventuell gashaltigen Brüden nicht an die Außenatmosphäre gelangen, sondern kontrolliert abgesaugt und einer Brüdenbehandlung, z. B. Kondensation, oder einer direkten Verwertung oder Entsorgung, z. B. einer Verbrennung, zugeführt werden.

Über den Weg des Schlammeintrages, der häufig als Zuführschnecke ausgebildet ist, gelangt eine je nach Ausführung unterschiedlich große Luftmenge in den Trockner, die mindestens dem Lückenvolumen des Klärschlammes entspricht.

Darüber hinaus wird aus betrieblichen Gründen, um den Trocknungsvorgang zu verbessern oder zumindest zu beeinflussen, häufig ein zusätzlicher, einstellbarer Luftstrom über eine eigene Zuführung eingeleitet.

Damit ist es möglich, daß im Trockner eine explosionsfähige Mischung aus Staub, Gasen, Luft und, je nach Betriebsfall, unterschiedlich viel Wasserdampf entsteht.

Im allgemeinen ist der Wasserdampfgehalt in diesen Brüden ausreichend hoch, so daß die Sauerstoffkonzentration unterhalb der für die Zündfähigkeit notwendigen Grenze liegt. In diesem Fall wirkt der Wasserdampf als Inertisierungsmittel.

In besonderen, jedoch durchaus betriebsüblichen Fällen kann der Wasserdampfgehalt stark erniedrigt und/oder die zugeführte Luftmenge erhöht sein.

Dies tritt beispielsweise bei 'Übertrocknung' auf, wenn bei anstehender Beheizungsenergie kein oder zu wenig Klärschlamm in den Trockner eingebracht wird und/oder die Verweilzeit des Schlammes zu hoch ist.

Störungen im Bereich der Klärschlammaufgabe, Störungen im Bereich der Brüdenabsaugung oder Undichtigkeiten können zu einer erhöhten Lufteinbringung in den Trockner führen und somit wieder zündfähige Mischungen bewirken.

In solchen Fällen bedarf es lediglich eines Zündfunkens, um eine Verpuffung oder gar Explosion auszulösen. Das Entstehen von Zündquellen läßt sich trotz vorbeugender Maßnahmen nicht mit der geforderten Sicherheit ausschließen, da unter anderem der Schlamm Metallteile mitführen kann, die Funken schlagen, oder auch mechanische Störungen (z. B. Heißlaufen drehender Teile) auftreten können.

Aus der DE-A-33 24 251 ist es bekannt, die zu trocknenden, brennbaren Feststoffe direkt mit den heißen Rauchgasen einer Brennkammer in Berührung zu bringen. Zur Einstellung bzw. Aufrechterhaltung einer inerten Atmosphäre wird die Brennkammer vor der Inbetriebnahme der Brennkammer entlüftet und mit einem Inertisierungsmittel inertisiert, sodann ein inertes Rauchgas erzeugt, mit diesem die Trocknung durchgeführt und ein Teil der dann wasserdampfgesättigten Brüden im Kreislauf zurückgeführt.

In der FR-A-2 466 439 wird ein ebenfalls direkt beheiztes Trocknungsverfahren beschrieben, wobei dem zu trocknenden Klärschlamm ein hinreichend inertes Kreislaufgas zugeführt wird, das aus Brüden und Rauchgas zusammengesetzt ist und die erforderliche Wärme seinerseits über einen Wärmetauscher bezieht. Zur Aufrechterhaltung der Kreislaufgaszusammensetzung wird ein Teilstrom abgezogen, verbrannt und durch ein mit niedrigem Luftverhältnis erzeugtes Rauchgas ersetzt.

In der DE-C-35 08 014 wird schließlich ein mit Kreislaufgas intern beaufschlagter Durchlauftrockner beschrieben, dessen Ein- und Austrittsöffnungen mit einem Inertgas-"schleier" versehen sind, so daß der Eintritt von Luft in das System verhindert wird. Zur Minimierung der erforderlichen Inertgasmenge an den Öffnungen wird eine Vorrichtung beschrieben, die den Differenzdruck an den Öffnungen möglichst gegen "Null" regeln soll.

Der Erfindung liegt die Aufgabe zugrunde, ein einfaches und in allen Betriebszuständen bzw. in allen kritischen Bereichen der Trockneranlage explosionssicheres Trocknungsverfahren vorzuschlagen.

Erfindungsgemäß wird dies in einer besonders wirtschaftlichen Weise dadurch erreicht, daß die pneumatische Förderung mit einem Inertgas und/oder die mechanische Förderung in einer Inertgasatmosphäre geschieht und das Inertgas anschließend in den Klärschlammvorlagebehälter und ggfs den Trockner geleitet wird.

Weitere erfindungsgemäße Vorschläge sind in den Unteransprüchen 2 bis 11 enthalten.

Der Vorlagebehälter kann insbesondere gasdicht mit nur jeweils einem Ausgang des Schlammes in Richtung Trockner und einem Eingang für den Schlamm ausgebildet sein.

Bei dem erfindungsgemäßen Verfahren sind weiterhin im Schlammweg zwischen Vorlagebehälter und Trockner Maßnahmen vorgesehen, durch die eine nennenswerte Durchströmung der Behälteratmosphäre in den Trockner verhindert wird. Dies läßt sich sowohl über Schleusensysteme, wie z. B. Zellenradschleusen oder Doppelpendelklappen, als auch vorzugsweise durch Sicherstellung einer als Sperrstrecke dienenden Mindestfüllung von Schlamm im Vorlagebehälter bewerkstelligen. Mit diesen Maßnahmen wird erreicht, daß im wesentlichen nur die Menge an Behälteratmosphäre in den Trockner gelangt, die dem Lückenvolumen des Schlammes entspricht. Diese Menge ist erfindungsgemäß kleiner als die Menge des die Trockengutförderung verlassenden Inertgases.

Dadurch, daß die Schlammeintrittsleitung des Vorlagebehälters einen möglichst niedrigen, nur die problemlose Förderung des Schlammes sicherstellenden Querschnitt aufweist, besitzt das überschüssige Inertgas in dieser Leitung eine Geschwindigkeit, die das Eindringen von Luft wirkungsvoll verhindert.

Durch diese Ausgestaltung des Vorlagebehälters zusammen mit der Schlammzuführ- und -austragsleitung wird eine stets inerte Atmosphäre in diesem Behälter ohne zusätzliche Zufuhr von frischem Inertgas erreicht und damit auch das Eindringen von Luftsauerstoff in den Trockner verhindert.

Der überwiegende Teil des in den Vorlagebehälter eingebrachten Inertgases wird im Bereich der Schlammeintrittsleitung über eine als Zugunterbrecher ausgestaltete Einrichtung zusammen mit der für die Dampferzeugung notwendigen Verbrennungsluft in den Brenner abgesaugt.

Ein zweiter, individuell einstellbarer Nebenstrom des die Trockengutförderung verlassenden Inertgases kann direkt in den Trockner geleitet werden. Es dient insbesondere auch der Beeinflussung des Trocknungsvorganges, indem der Taupunkt der entstehenden Brüden erniedrigt wird. Dieser Zweigstrom ersetzt somit die üblicherweise zu diesen Zwecken zugeführte Luft.

Von besonderem Vorteil ist es erfindungsgemäß, diesen Inertgas-Nebenstrom mittels einer Mengenregelung zuzuführen. So kann beispielsweise nach der Brüdenkondensation die Menge des von Wasserdampf weitgehend befreiten Abgasstromes, der sich im wesentlichen aus dem mit dem Klärschlamm eingebrachten Inertgasstrom sowie dem erwähnten Inertgas-Nebenstrom zusammensetzt, gemessen und durch geregelte Zufuhr des Inertgas-Nebenstromes konstant gehalten werden. Sowohl durch Vergleich dieser beiden Mengen als auch indirekt durch das Stellsignal dieser Mengenregelung ist sodann eine Ahschätzung des mit dem Klärschlamm eingebrachten inerten Volumenstromes gegeben. Ein Abweichen dieser Größe von dem üblichen Regelbereich deutet auf Störungen im Bereich des Schlammeintrages hin, denen dann über eine entsprechende Verriegelung rechtzeitig begegnet werden kann.

Wird das Verhältnis von dem direkt in den Trockner geleiteten Nebenstrom zu dem mit dem Schlamm eingebrachten Gasstrom entsprechend hoch eingestellt, so kann in dem Trockner selbst dann eine inerte Atmosphäre aufrechterhalten werden, wenn der Vorlagebehälter aus störungsbedingten Gründen keine inerte Atmosphäre aufweisen sollte und statt dessen Luft enthielte. Das hoch eingestellte Mengenverhältnis sorgt dann für eine entsprechende Verdünnung und Erniedrigung des Sauerstoffgehaltes unter die Explosionsgrenzen.

Mit dieser erfindungsgemäßen Fahrweise wird eine redundante Sicherstellung einer inerten Trocknungsatmosphäre wirkungsvoll kombiniert mit einer für den Trocknungsprozeß günstigen Zufuhr an inertem Gas.

Obwohl sich bei Anwendung der erfindungsgemäßen Kombination aus Inertisierung des Vorlagebehälters mit zusätzlicher, kontrollierter Zugabe inerten Gases direkt in den Trockner gerade die Messung von Sauerstoffkonzentration und/oder Explosionsfähigkeit in den Brüden erübrigt, kann eine Sauerstoffkonzentrationsmessung zu einer Minimierung der insgesamt zuzuführenden Inertgasmenge beitragen. Da diese Inertgasmengen letztendlich in die Verbrennung oder eine andere Behandlung geleitet werden müssen, kann eine Minimierung erwünscht sein, wenn nur sehr wenig Inertgas aus der Trockengutförderung zur Verfügung steht und kein zusätzliches Inertgas eingesetzt werden soll.

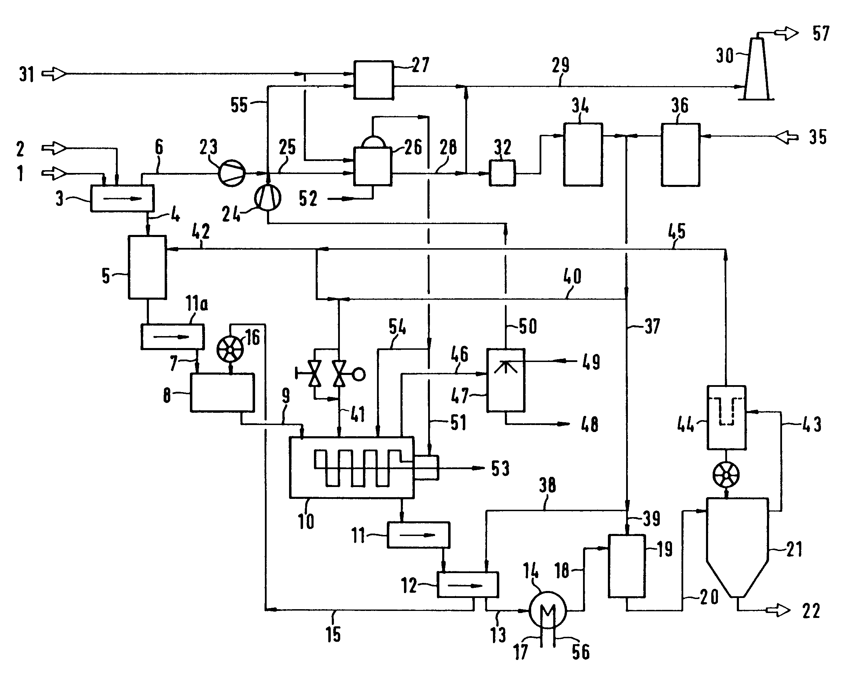

Die Erfindung wird anhand der beigefügten Figur beispielsweise näher erläutert.

Einem geschlossenen Trogkettenförderer (3) wird der vorgetrocknete Klärschlamm (1) und die Luft (2) zugeführt. Damit aus diesem Trogkettenförderer (3) keine Emissionen in die Atmosphäre treten, wird er mit Unterdruck gefahren, indem über die Leitung (6) und das Gebläse (23) das Gemisch aus Luft und Inertgas abgezogen wird.

Aus dem Trogkettenförderer (3) gelangt der Klärschlamm über (4) in den Klärschlammvorlagebehälter (5), aus dem er mit Hilfe des Schneckenförderers (11a) und über die Leitung (7) in den Mischer (8) und vor dort über die Leitung (9) in den Scheibentrockner (10) gelangt. Dort wird der Klärschlamm mit Hilfe von Heizdampf, der über die Leitung (51) zugeführt wird, indirekt erhitzt. Die Verhältnisse im Brüdenraum des Trockners können ggfs. durch Zugabe von Heizdampf über die Leitung (54) beeinflußt werden.

Der getrocknete Klärschlamm gelangt über die Schneckenförderer (11) und (12) und die Leitung (13) in einen Trockengutkühler (14) und von dort über Leitung (18) über das pneumatische Fördersystem (19, 20) in den Trockengutsilo (21), aus dem der trockene Klärschlamm über die Leitung (22) zur weiteren Verwendung abgezogen werden kann. Aus dem Trockengutförderer (12) wird ein Teil des getrockneten Klärschlammes abgezogen und über die Leitung (15) und die Zellenradschleuse (16) in den Mischer (8) zur Erniedrigung des Feuchtegehaltes des dem Trockner zugeführten feuchten Klärschlammes gegeben.

Die Lagerung und Förderung des Klärschlammes geschieht erfindungsgemäß in einer Inertgasatmosphäre in der Weise, daß ein Verbrennungsabgas aus dem Dampferzeuger (26) und/oder der thermischen Nachverbrennung (27) über die Leitung (28) dem Inertgaserzeuger (32) und dem Inertgasspeicher (34) zugeführt wird und über die Leitungen (37) bis (41) kommend der pneumatischen Fördereinrichtung (19), dem Schneckenförderer (12) und dem Scheibentrockner (10) zugeführt wird. Ergänzend oder alternativ kann den Leitungen (37) bis (41) auch aus der Leitung (35) bzw. dem Speicher (36) Stickstoff zugegeben werden.

Das zugegebene Inertgas wird aus dem Trockengutsilo (21) über die Leitung (43) gemeinsam mit Feststoffpartikeln in den Abscheider (44) geleitet, aus dem die Feststoffe wieder zurück in den Trockengutsilo (21) und das Inertgas über die Leitungen (45) und (42) zum Behälter (5) und ggfs über die Leitung (41) zum Scheibentrockner (10) geführt wird. Aus dem Scheibentrockner (10) werden über Leitung (46) die feuchten Brüden und das Inertgas in den Kondensator (47) geleitet, in dem sie mit Kühlwasser (49) besprüht werden.

Das Kondensat wird über Leitung (48) abgezogen, während über (50) die verbliebenen Brüden und das Inertgas mit Hilfe des Gebläses (24) gemeinsam mit dem Gemisch aus Luft und Inertgas (6) entweder über die Leitung (25) zum Dampferzeuger (26) oder über die Leitung (55) zur thermischen Nachverbrennung (27) gelangen. Dem Dampferzeuger (26) wird über (52) Kesselspeisewasser zugeleitet, das als Heizdampf dem Scheibentrockner (10) zugeleitet wird, wobei das Dampfkondensat über (53) aus dem Scheibentrockner (10) abgezogen wird.

Der thermischen Nachverbrennung wird über (31) zusätzlich Brennstoff zugeführt und das Verbrennungsabgas gelangt über die Leitung (29) und den Kamin (30) über (57), gegebenenfalls nach einer weiteren Endreinigung, in die Atmosphäre.

Schließlich besitzt der Trockengutkühler (14) noch den Kühlwasserkreislauf (17) und (56).

### Bezugszeichenliste

- (1), (4), (7): Klärschlamm (KS)
- (2): Luft
- (3): Trogkettenförderer
- (5): Klärschlammvorlagebehälter
- (6): Inertgas und Luft
- (8): Mischer
- (9): feuchter und getrockneter Klärschlamm
- (10): Scheibentrockner
- (11), (11a), (12): Schneckenförderer
- (13), (18): getrockneter Klärschlamm
- (14): Trockengutkühler
- (15): Rückführung des getrockneten Klärschlammes
- (16): Zellenradschleuse
- (17), (49), (56): Kühlwasser
- (19), (20): pneumatische Fördervorrichtung für trockenen Klärschlamm
- (21): Trockengutsilo
- (22): trockener Klärschlamm
- (23), (24): Gebläse
- (25), (55): Inertgas und Luft und Brüden
- (26): Dampferzeuger
- (27): thermische Nachverbrennung (TNV)
- (28), (29): Verbrennungsabgas
- (30): Kamin
- (31): Brennstof
- (32): Inertgaserzeuger
- (34): Inertgasspeicher
- (35): N₂-Zugabe
- (36): N₂-Speicher
- (37) - (42), (45): Inertgasleitungen
- (43): Inertgas und Feststoffpartikel
- (44): Abscheider für Feststoffpartikel
- (46), (50): Brüden und Inertgas
- (47): Kondensator
- (48): Kondensat
- (51), (54): Heizdampf
- (52): Kesselspeisewasser
- (53): Dampfkondensat
- (57): Rauchgas

## Patentansprüche

1. Verfahren zur explosionssicheren Trocknung von vorentwässerten Klärschlämmen oder ähnlichen, brennbare Bestandteile enthaltenden Einsatzstoffen, wobei die Trocknungsanlage vorzugsweise aus indirekt beheizten Trocknern und einer pneumatischen und/oder mechanischen Trockengutförderung mit anschließendem Trockengutlagerbehälter besteht, **dadurch gekennzeichnet,** daß die pneumatische Förderung mit einem Inertgas und/oder die mechanische Förderung in einer Inertgasatmosphäre geschieht und daß das Inertgas anschließend in den Klärschlammvorlagebehälter und ggfs. den Trockner geleitet wird.

2. Verfahren nach Anspruch 1, **dadurch gekennzeichnet,** daß zur Verhinderung des Eindringens von Luft das in den Klärschlammvorlagebehälter eingeleitete Inertgas in einem im wesentlichen geschlossenen System ganz oder teilweise, gegebenenfalls über einen zwischengeschalteten Mischer in den Trockner und gegebenenfalls auch in nachgeschaltete Anlagenteile geleitet wird.

3. Verfahren nach den Ansprüchen 1 und 2, **dadurch gekennzeichnet,** daß der Inertgasstrom aus dem Vorlagebehälter in den Trockner durch die Durchströmung begrenzende Maßnahmen, vorzugsweise Sperrschichten aus Klärschlamm oder ein Schleusensystem, klein gehalten und im günstigsten Fall auf das Lückenvolumen im Klärschlammstrom beschränkt wird.

4. Verfahren nach den Ansprüchen 1 bis 3, **dadurch gekennzeichnet,** daß der Schlamm mit einer Dickstoff- oder Schlammpumpe aus dem Vorlagebehälter abgezogen wird.

5. Verfahren nach den Ansprüchen 1 bis 3, **dadurch gekennzeichnet,** daß das in den Vorlagebehälter eingebrachte, nicht mit dem Klärschlamm ausgetragene Inertgas zusammen mit vorzugsweise aus entgegengesetzter Richtung zuströmender Außenluft an einem Ort in oder an der Klärschlammzuführleitung vor dem Vorlagebehälter abgezogen wird.

6. Verfahren nach Anspruch 5, **dadurch gekennzeichnet,** daß der abgezogene Gasstrom, bestehend aus Luft und der verfahrensgemäß inerten Atmosphäre des Vorlagebehälters, einer Verbrennung oder einer zumindest desodorierend wirkenden Gasreinigung, wie beispielsweise einem Bio-Erdfilter, zugeführt wird.

7. Verfahren nach Anspruch 6, **dadurch gekennzeichnet,** daß die Verbrennung vorzugsweise mit der die thermische Energie für die Beheizung des Trockners erzeugenden Anlage verbunden ist.

8. Verfahren nach mindestens einem der vorhergehenden Ansprüche, **dadurch gekennzeichnet,** daß der ganz oder zum Teil direkt in den Trockner eingeleitete Inertgasstrom abhängig von der Sauerstoffkonzentration und/oder der Taupunkttemperatur und/oder weiteren Trocknungsparametern eingestellt und/oder geregelt wird.

9. Verfahren nach Anspruch 8, **dadurch gekennzeichnet,** daß das erforderliche Mengenverhältnis in Abhängigkeit von der Menge des direkt in den Trockner geleiteten Inertgases und der weitgehend wasserfreien Trocknerbrüden nach deren Kondensation geregelt wird.

10. Verfahren nach mindestens einem der vorhergehenden Ansprüche, **dadurch gekennzeichnet,** daß handelsübliche Inertgase, wie z. B. Stickstoff, das in Flaschen oder Tanks gelagert wird, oder ein in einer Inertgaserzeugungsanlage hergestelltes Gas verwendet wird.

11. Verfahren nach Anspruch 10, **dadurch gekennzeichnet,** daß als ein Einsatzmedium für die Inertgaserzeugungsanlage Rauchgas verwendet wird, das vorzugsweise der die Beheizungsenergie für den Trockner liefernden Verbrennungseinrichtung entnommen wird.

## Claims

1. Process for explosion-proof drying of preliminarily dried sewage sludge or similar material of application including combustible constituents, the drying plant preferably consisting of indirectly heated driers and a pneumatic and/or mechanical conveyor for material to be dried with subsequent storage container for material to be dried **characterised by the fact that** pneumatic transportation is effected by application of an inert gas and/or mechanical transportation is effected in an inert gas atmosphere and that the inert gas is subsequently led into the sewage sludge collecting tank or, if required, into the drier.

2. Process as per claim 1, **characterised by the fact that** the inert gas fed into the sewage sludge collecting tank is entirely or partly led into the drier in an essentially closed system if required through an interposed mixer and that it is led into subsequent plant parts if required.

3. Process as per claims 1 and 2, **characterised by the fact that** the inert gas flow from the collecting tank into the drier is kept low by taking flow-limiting measures, preferably barrier layers of sewage sludge or a sluice system and limited to the interstice volume in the sewage sludge flow in the most favourable case.

4. Process as per claims 1 and 3, **characterised by the fact that** the sludge is drawn off the collecting tank by a thick constituents pump or a sludge pump.

5. Process as per claims 1 and 3, **characterised by the fact that** the inert gas fed into the collecting tank and not discharged with the sewage sludge is drawn off together with outside air preferably streaming in from the opposite direction to a location in or near the sewage sludge supply line in front of the collecting tank.

6. Process as per claim 5, **characterised by the fact that** the drawn-off gas flow consisting of air and the inert gas atmosphere of the collecting tank as per the process is fed into a combustion or a gas purging having at least a deodorizing effect as for example a biological earth filter.

7. Process as per claim 6, **characterised by the fact that** combustion is preferably connected with the plant generating the thermal energy for heating the drier.

8. Process as per at least one of the preceding claims , **characterised by the fact that** the inert gas flow fed entirely or partly directly into the drier is controlled and/or adjusted depending on the oxygen concentration and/or the dew point temperature and/or further drying parameters.

9. Process as per claim 8, **characterised by the fact that** the required quantitative ratio depending on the quantity of the inert gas fed directly into the drier and depending on the largely water-free drying vapors is controlled after condensation of these.

10. Process as per at least one of the preceding claims, **characterised by the fact that** commercial-grade inert gases as for example nitrogen stocked in bottles or tanks or another gas produced in an inert gas generation plant is applied.

11. Process as per claim 10, **characterised by the fact that** flue gas which is preferably taken from the combustion device supplying the drier with heating energy is applied as a medium for the inert gas generation plant.

## Revendications

1. Procédé pour le séchage de boues d'épuration à protection anti-déflagrante préassechés ou de substances d'emploi semblables contenant de composants combustibles, l'installation de séchage comprenant de préférence des sécheurs chauffés indirectement ainsi qu'une installation d'acheminement de matières seches pneumatiques et/ou méchanique avec un réservoir de stockage consécutive, **caractérisé par le fait** que l'acheminement pneumatique est réalisé par un gaz inerte et/ou l'acheminement méchanique se réalise dans une atmosphère de gaz inerte et que le gaz inerte est consécutivement conduit dans le collecteur de boue d'épuration et le cas échéant dans le sécheur.

2. Procédé selon la revendication 1 **caractérisé par le fait** que le gaz inerte est conduit entièrement ou partiellement dans un système essentiellement fermé, le cas échéant par un mélangeur intercalé dans le sécheur et le cas échéant aussi conduit dans des parts d'installation intercalés en arrière.

3. Procédé selon les revendications 1 et 2, **caractérisé par le fait** que le courant de gaz inerte du collecteur au sécheur est limité par des mésures limitant le passage à travers de préférence de couches de barrage en boue d'épuration ou un système d'écluses de petite dimension et le cas le plus favorable limité au volume des interstices.

4. Procédé selon les revendications 1 à 3, **caractérisé par le fait** que le boue est tiré du collecteur par une pompe pour serres ou à boue.

5. Procédé selon les revendications 1 et 2, **caractérisé par le fait** que le gaz inerte conduit dans le collecteur et pas transporté ensemble au boue d'épuration est tiré avec de l'air extérieure affluant de préférence en direction inverse dans un espace dans ou auprès de la conduite alimentatrice de boue d'épuration.

6. Procédé selon la revendication 5, **caractérisé par le fait** que le courant de gaz tiré composé d'air et conformément au procédé de l'atmosphère inerte du collecteur est acheminé à une incinération ou une purification de gaz ayant au moins un effet désodorisant comme par exemple un biofiltre de terre.

7. Procédé selon la revendication 6, **caractérisé par le fait** que la combustion est conjuguée de préférence avec l'installation générant l'énergie thermique pour le chauffage du sécheur.

8. Procédé selon au moins l'une des revendications précédentes **caractérisé par le fait** que le courant de gaz inerte conduit par l'entière ou partiellement directement dans le sécheur est ajusté et/ou contrôlé dépendant de la concentration en oxygène et/ou de la température du point de condensation et/ou d'autres paramètres de séchage.

9. Procédé selon la revendication 8, **caractérisé par le fait** que la constitution quantitative nécessaire est contrôlée dépendant de la quantité en gaz inerte directement conduit dans le sécheur et des buées du sécheur après qu'ils sont condensés.

10. Procédé selon au moins l'une des revendications précédentes **caractérisé par le fait** que des gaz inertes commerciaux comme par exemple nitrogène stocké dans des bouteilles ou dans des containeurs ou un gaz produit dans une installation de génération de gaz inerte sont appliqués.

11. Procédé selon la revendication 8, **caractérisé par le fait** que gaz de brûlé que vient de préférence pris de l'installation de combustion fournissant l'énergie de chauffage pour le sécheur est appliqué comme médium d'emploi pour l'installation de génération de gaz inerte.
